# EUROPEAN PATENT APPLICATION

(11) **EP 4 732 935 A1**
(43) Date of publication of application: **29.04.2026**
(21) Application number: 25775700.5
(22) Date of filing: 18.03.2025
(51) Int. Cl.: B01D 53/22, B01D 61/58

(54) **GAS SEPARATION SYSTEM AND ENRICHED GAS PRODUCTION METHOD**

(30) Priority: 27.03.2024 JP 2024052318
(71) Applicant: UBE Corporation, Ube-shi, Yamaguchi 755-8633 (JP)
(72) Inventor: FUKUDA, Nobuhiko, Ube-shi, Yamaguchi 755-8633 (JP); FUKUNAGA, Takumi, Ube-shi, Yamaguchi 755-8633 (JP)
(74) Representative: Forstmeyer, Dietmar
(86) International application number: PCT/JP2025/010580
(87) International publication number: WO 2025/205283

(57) **Abstract**

The unit (11) and the unit (12) are connected via the line (14); the unit (11) and the unit (13) are connected via the permeate gas line (15); the raw material mixed gas supply line (16) is connected to the unit (11) and the compression means (21) is interposed in the line (16); the permeate gas line (70) is connected to the unit (13); the gas separation membrane unit (12) and the line (16) are connected via the permeate gas recycle line (17); the gas separation membrane unit (13) and the line (16) are connected via the retentate gas recycle line (18); the permeate gas line (70) includes a flow path that allows a part of the permeate gas discharged from the unit (13) to be recycled to the line (16); and the enriched gas is recovered from the unit (12).

## Description

### Technical Field

The present invention relates to a gas separation system for separating a mixed gas, the system including a plurality of gas separation membrane units, and a method for producing an enriched gas using the gas separation system.

### Background Art

PTL 1 discloses a three-stage gas separation system that recovers a product gas as the retentate gas of the second stage. PTL 1 discloses that the product gas can be obtained using the system with a reduced membrane area at a high recovery rate and a high purity.

PTL 2 discloses a two-stage gas separation system in which a part of the permeate gas from the first stage is recycled to a raw material mixed gas supply line.

### Citation List

### Patent Literature

[PTL. 1] US 2015/0273388A
[PTL. 2] WO 2024/014493

### Summary of Invention

In the gas separation system disclosed in PTL 1, when the flow rate of the raw material mixed gas decreases, the recovery rate of the enriched gas (product gas) decreases if the operation is continued without changing the configuration of each gas separation membrane unit. For maintaining the recovery rate of the enriched gas (product gas) within a certain range, it is necessary to reduce the number of modules operated in the gas separation membrane unit or to reduce the operation pressure. To reduce the number of modules operated, a closing valve is required for each module, and also, when the number of modules operated is reduced, a difference (variation) in the degree of contamination (gas permeation performance) occurs with time between the module that continues to operate and the closed module, which may lead to a decrease in system performance. Although lowering the operation pressure may be considered as a countermeasure, there is a limit since the resulting operation pressure may be outside the proper pressure range of the compressor operation. Lowering the operation pressure may also cause the following problems: the product gas pressure may become less than the standard value and thus, recompression of the product gas may be necessary.

On the other hand, the present inventors have found that, when a part of the permeate gas of the first stage is recycled to the raw material mixed gas supply line as in PTL 2 in a three-stage gas separation system in which the retentate gas of the second stage is the product gas, the effect of maintaining the recovery rate is not sufficient.

Accordingly, an object of the present invention is to provide a gas separation system and a method for producing an enriched gas that are capable of overcoming the above-described drawbacks of the related art.

As a result of intensive studies to achieve the above-described object, the present inventors have surprisingly found that, in a three-stage gas separation system in which the retentate gas of the second-stage is recovered as a product gas, the recovery rate of the product gas in the gas separation system can be effectively maintained by recycling a part of the permeate gas of the third-stage, not the permeate gas of the first-stage, to a raw material mixed gas supply line.

The present invention has been made based on the above findings and provides the following [1] to [9].
[1] A gas separation system for enriching at least one of gases contained in raw material mixed gas by supplying the raw material mixed gas to a gas separation membrane unit included in the gas separation system,
   wherein the gas separation system comprises a first gas separation membrane unit, a second gas separation membrane unit, and a third gas separation membrane unit,
   each gas separation membrane unit comprises at least a gas inlet, a permeate gas outlet, and a retentate gas outlet,
   the retentate gas outlet of the first gas separation membrane unit and the gas inlet of the second gas separation membrane unit are connected via a first retentate gas line,
   the permeate gas outlet of the first gas separation membrane unit and the gas inlet of the third gas separation membrane unit are connected via a first permeate gas line, and
   a raw material mixed gas supply line is connected to the gas inlet of the first gas separation membrane unit, and a compression means is interposed in the raw material mixed gas supply line,
   a third permeate gas line is connected to the permeate gas outlet of the third gas separation membrane unit,
   the permeate gas outlet of the second gas separation membrane unit and a position on a suction side of the compression means in the raw material mixed gas supply line are connected to each other via a second permeate gas recycle line, and
   the retentate gas outlet of the third gas separation membrane unit and a position on a suction side of the compression means in the raw material mixed gas supply line are connected to each other via a third retentate gas recycle line,
   the third permeate gas line comprises a flow path that allows a part of the permeate gas discharged from the third gas separation membrane unit to be recycled to a position on a suction side of the compression means in the raw material mixed gas supply line, and
   an enriched gas is recovered from the retentate gas outlet of the second gas separation membrane unit.
[2] The gas separation system according to [1], wherein the third permeate gas line comprises a flow path branch portion, and a first flow path, second flow path, and third flow path below, and further comprises a flow rate adjustment unit that adjusts a flow rate of the permeate gas flowing into the second flow path;
   First flow path: a flow path connecting the flow path branch portion and the permeate gas outlet of the third gas separation membrane unit,
   Second flow path : a flow path connecting the flow path branch portion and a position on the suction side of the compression means in the raw material mixed gas supply line,
   Third flow path : a flow path connecting the flow path branch portion and the outside of the system.
[3] The gas separation system according to [2], wherein the gas separation system comprises: a flow rate detection unit configured to detect a flow rate of the raw material mixed gas flowing into the raw material mixed gas supply line; and a control unit configured to instruct the flow rate adjustment unit to increase the flow rate of the permeate gas flowing into the second flow path when the flow rate of the raw material mixed gas detected by the flow rate detection unit decreases.
[4] The gas separation system according to any one of [1] to [3], wherein the raw material mixed gas includes a gas A and a gas B, each of the first gas separation membrane unit, the second gas separation membrane unit, and the third gas separation membrane unit has higher permeability to the gas A than to the gas B,
   the gas separation membrane of the first gas separation membrane unit has a gas separation selectivity at 40°C (P₁'A⁽⁴⁰⁾/P₁'B⁽⁴⁰⁾) of 30 or more and 150 or less, and the gas separation membrane of the third gas separation membrane unit has a gas separation selectivity at 40°C (P₃'A⁽⁴⁰⁾/P₃'B⁽⁴⁰⁾) of 30 or more and 150 or less.
[5] The gas separation system according to any one of [1] to [4], wherein the raw material mixed gas is a biogas, and a methane-enriched gas is recovered from the retentate gas outlet of the second gas separation membrane unit.
[6] The gas separation system according to any one of [1] to [5], wherein the permeate gas discharged from the third gas separation membrane unit has a permeate gas flow rate P3; a gas recycled to the position on the suction side of the compression means in the raw material mixed gas supply line has a flow rate PR3, the gas being a portion of the permeate gas discharged from the third gas separation membrane unit; and a ratio of PR3 to P3 is 1% or more and 80% or less.
[7] The gas separation system according to any one of [1] to [6], wherein the amount of the raw material mixed gas flowing into the gas separation system fluctuates by 5% or more during operation.
[8] The gas separation system according to any one of [1] to [7], wherein the first permeate gas line comprises a flow path that allows a part of permeate gas discharged from the first gas separation membrane unit to be recycled to a position on the suction side of the compression means in the raw material mixed gas supply line.
[9] A method for producing enriched gas, the method comprising supplying raw material mixed gas to a gas separation system to enrich at least one of gases contained in the raw material mixed gas,
   wherein the gas separation system comprises a first gas separation membrane unit, a second gas separation membrane unit, and a third gas separation membrane unit,
   each gas separation membrane unit comprises at least a gas inlet, a permeate gas outlet, and a retentate gas outlet,
   the retentate gas outlet of the first gas separation membrane unit and the gas inlet of the second gas separation membrane unit are connected via a first retentate gas line,
   the permeate gas outlet of the first gas separation membrane unit and the gas inlet of the third gas separation membrane unit are connected via a first permeate gas line, and
   a raw material mixed gas supply line is connected to the gas inlet of the first gas separation membrane unit, and a compression means is interposed in the raw material mixed gas supply line,
   a third permeate gas line is connected to the permeate gas outlet of the third gas separation membrane unit,
   the permeate gas outlet of the second gas separation membrane unit and a position on a suction side of the compression means in the raw material mixed gas supply line are connected to each other via a second permeate gas recycle line, and
   the retentate gas outlet of the third gas separation membrane unit and a position on a suction side of the compression means in the raw material mixed gas supply line are connected to each other via a third retentate gas recycle line,
   the third permeate gas line comprises a flow path that allows at least a part of the permeate gas discharged from the third gas separation membrane unit to be recycled to a position on a suction side of the compression means in the raw material mixed gas supply line, and
   an enriched gas is recovered from the retentate gas outlet of the second gas separation membrane unit.

### Advantageous Effects of Invention

According to the present invention, in the three-stage gas separation system that recovers the product gas as the second-stage retentate gas, a high product gas recovery rate can be maintained even when the flow rate of the raw material mixed gas decreases.

### Brief Description of Drawings

[FIG. 1] FIG. 1 is a schematic diagram showing a configuration of a gas separation system according to a first embodiment of the present invention.
[FIG. 2] FIG. 2 is a schematic diagram showing a configuration of a gas separation system according to a second embodiment of the present invention.
[FIG. 3] FIG. 3 is a schematic diagram showing a configuration of a gas separation system of Comparative Example 1.
[FIG. 4] FIG. 4 is a schematic diagram showing a configuration of a gas separation system of Comparative Example 2.
[FIG. 5] FIG. 5 is a schematic view showing an exemplary structure of a gas separation membrane module used in the gas separation system of the present invention.

### Description of Embodiments

Hereinafter, the present invention will be described based on preferred embodiments thereof with reference to the drawings.

Herein, the expression "connecting A and B via a line C" or "a line C connecting A and B" includes both the case where A and B and a line C are separate members and the case where A and/or C is a continuous single member. The same applies to the expression "connecting a line E to D", which includes both the case where D and the line E are separate members and the case where D and the line E are a single member.

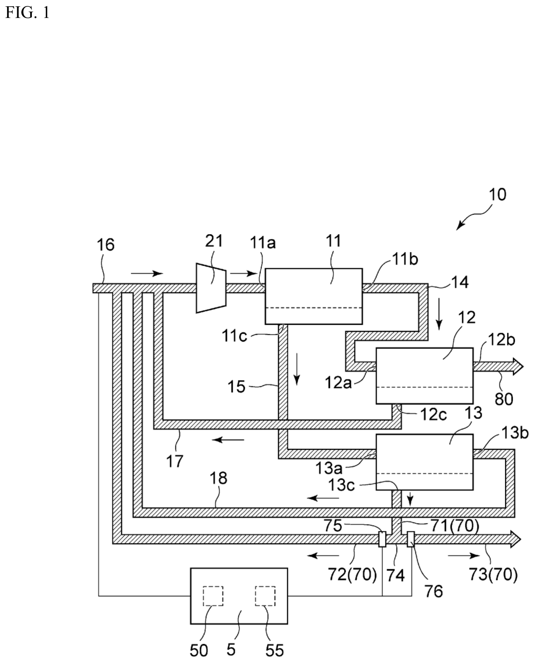

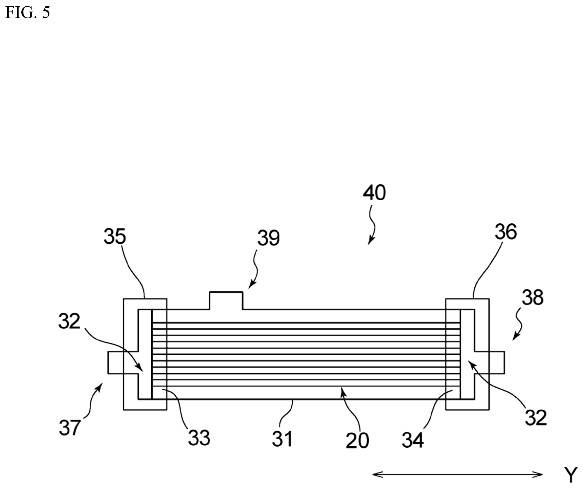

First, a gas separation system 10 according to a first system embodiment of the present invention and a method for producing enriched gas using the same according to a first method embodiment of the present invention will be described with reference to FIG. 1. A gas separation system 10 shown in FIG. 1 includes three gas separation membrane units: a first gas separation membrane unit 11, a second gas separation membrane unit 12, and a third gas separation membrane unit 13. As each of the gas separation membrane units 11, 12, and 13, it is possible to use, for example, a module 40 including a gas separation membrane 20 composed of hollow fiber membranes or the like and having gas selective permeability and a casing 31 housing the gas separation membrane 20, as shown in FIG. 5. Each of the gas separation membrane units 11, 12, and 13 of the present embodiment includes a single gas separation membrane module 40 as shown in FIG. 5 or includes a plurality of the modules 40 arranged in parallel. Two opposing surfaces of the casing 31 of the module 40 are opened to form an opening 32. It should be noted that the opening 32 is for inserting the gas separation membrane 20 into the casing 31 and is not an opening of the gas separation membrane 20. The gas separation membrane 20 is inserted in the casing 31 through the opening 32. In the case where the gas separation membrane 20 is a hollow fiber membrane bundle, the gas separation membrane 20 is housed in the casing 31 such that each end portion of the hollow fiber membrane is opened in the vicinity of each opening 32 of the casing 31 in the housed state of the gas separation membrane 20.

In a state where the gas separation membrane 20 is housed in the casing 31, the gas separation membrane 20 is fixed to the inner wall of the casing 31 by the tube plates 33 and 34 at positions of both end portions in the Y direction, which is the extending direction of the hollow fiber membrane. Each opening 32 of the casing 31 is closed by a lid 35, 36. The lid 35 is provided with a gas inlet 37. On the other hand, the lid 36 is provided with a retentate gas outlet 38. The mixed gas to be separated is introduced into the module through the gas inlet 37 of the lid 35. Of the introduced gas, the gas that has permeated the gas separation membrane 20 is discharged to the outside of the module through a permeate gas outlet 39 provided in the casing 31. On the other hand, the retentate gas that has not permeated the gas separation membrane 20 is discharged through the retentate gas outlet 38 of the lid 36 to the outside of the module. A purge gas supply inlet (not shown) may be optionally provided in the casing 31. Although the separation membrane module shown in FIG. 5 has been described as an example, the present invention can be applied to any separation membrane modules having other configurations, and can be applied to, for example, a shell feed type module.

Returning to FIG. 1, the first gas separation membrane unit 11 and the second gas separation membrane unit 12 are connected in series, as shown in FIG. 1. Specifically, the first gas separation membrane unit 11 and the second gas separation membrane unit 12 are linked by connecting the retentate gas outlet 11b of the first gas separation membrane unit 11 and the gas inlet 12a of the second gas separation membrane unit 12 via the first retentate gas line 14.

As shown in FIG. 1, the first gas separation membrane unit 11 and the third gas separation membrane unit 13 are connected in series. Specifically, the first gas separation membrane unit 11 and the third gas separation membrane unit 13 are linked by connecting the permeate gas outlet 11c of the first gas separation membrane unit 11 and the gas inlet 13a of the third gas separation membrane unit 13 via the first permeate gas line 15.

A raw material mixed gas supply line 16 for supplying a raw material mixed gas, as a raw material, from a mixed gas source (not shown) to the first gas separation membrane unit 11 is connected to the gas inlet 11a of the first gas separation membrane unit 11. A compression means 21 is interposed in the raw material mixed gas supply line 16. The compression means 21 is provided for the purpose of pressurizing the mixed gas supplied from the mixed gas source. In addition, the compression means 21 is provided for the following purposes: when the permeate gas discharged from the second gas separation membrane unit 12 is returned to the first gas separation membrane unit 11, the permeate gas is pressurized, and when the retentate gas discharged from the third gas separation membrane unit 13 is returned to the first gas separation membrane unit 11, the retentate gas is pressurized.

In the second gas separation membrane unit 12, the permeate gas outlet 12c is connected to the position on the suction side of the compression means 21 in the raw material mixed gas supply line 16 via the second permeate gas recycle line 17. On the other hand, in the third gas separation membrane unit 13, the retentate gas outlet 13b is connected to the position on the suction side of the compression means 21 in the raw material mixed gas supply line 16 via the third retentate gas recycle line 18.

A third permeate gas line 70 is connected to the permeate gas outlet 13c of the third gas separation membrane unit 13.

A second retentate gas line 80 is connected to the retentate gas outlet 12b of the second gas separation membrane unit 12.

As shown in FIG. 1, the third permeate gas line 70 includes a flow path 72 that allows a part of the permeate gas discharged from the third gas separation membrane unit 13 to be recycled to the position on the suction side of the compression means 21 in the raw material mixed gas supply line 16.

Specifically, the third permeate gas line 70 includes a flow path branch portion 74, and includes the following first flow path 71, second flow path 72, and third flow path 73.

First Flow path 71: a flow path connecting the flow path branch portion 74 and the permeate gas outlet 13c of the third gas separation membrane unit 13.

Second Flow path 72: a flow path connecting the flow path branch portion 74 and the position on the suction side of the compression means 21 in the raw material mixed gas supply line 16.

Third Flow path 73: a flow path connecting the flow path branch portion 74 and the outside of the system.

The expression "connecting to the outside the system" and its derivatives mean that the connection for recycling the permeate gas in the third flow path to any of the first to third gas separation membrane units 11 to 13 is not performed. The expression "connecting to the outside the system" and its derivatives encompass introducing the permeate gas in the third flow path into a concentrator (not shown), introducing into a storage container, into a compressor or a blower, or into an oxidation device or a combustion device, releasing into the atmosphere, and introducing into a fourth gas separation membrane unit, for example.

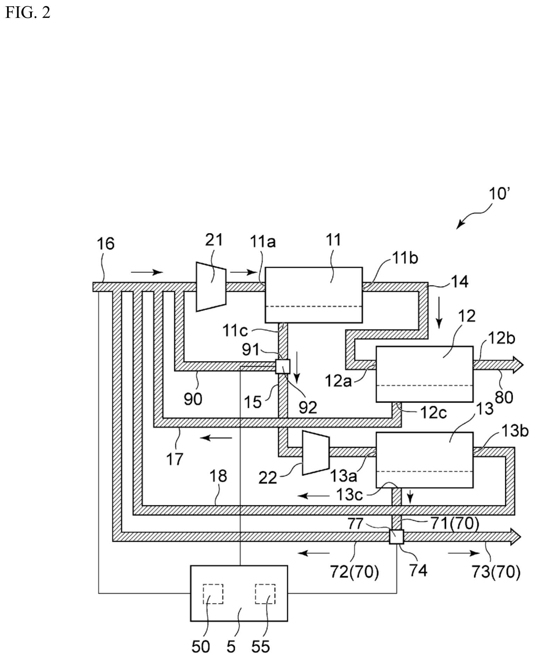

The third permeate gas line 70 preferably includes a flow rate adjustment unit for adjusting the flow rate of the permeate gas flowing into the second flow path 72. The flow rate adjustment unit may be provided in the flow path branch portion 74, or may be provided at a position close to the raw material mixed gas supply line 16 away from the branching portion 74 in the flow path 72, or may be provided in the flow path 73. As the flow rate adjustment unit, a three-way valve 77 (see FIG. 2) capable of adjusting the flow rate may be used, or two two-way valves may be provided in the branch portion, for example. In the example shown in FIG. 1, two-way valves 75 and/or 76 capable of adjusting the flow rate are provided, and these valves are controlled by the control unit 5 to thereby control the permeate gas from the third gas separation membrane unit 13 (unit: Nm³/h), and the ratio of the flow rate of the gas recycled through the second flow path 72 (PR3) to the flow rate of the permeate gas from the third gas separation membrane unit 13 (P3) (i.e., the ratio PR3/P3). Examples of the two-way valve capable of adjusting the flow rate include a needle valve, a ball valve, and a butterfly valve.

It should be noted that P3 is the flow rate (unit: Nm³/h) of the gas discharged from the permeate gas outlet of the third gas separation membrane unit 13 (hereinafter, the gas is also referred to as "third permeate gas"; the other gases may hereinafter also be designated in the same manner). PR3 is the flow rate (Nm³/h) of the gas recycled to the raw material mixed gas supply line 16, the gas being a portion of the third permeate gas.

The operation of the gas separation system 10 of the present embodiment having the above-described configuration will be described. The raw material mixed gas to be separated is supplied from a mixed gas source (not shown) to the first gas separation membrane unit 11 through a raw material mixed gas supply line 16. Prior to the supply, the raw material mixed gas is pressurized by the compression means 21 so that the pressure thereof is increased. As the compression means 21, the same means as those used so far in the art can be used. For example, a compressor can be used.

The raw material mixed gas includes at least a gas A and a gas B that are two different kinds of gases to be separated. When the mixed gas pressurized by the compression means 21 is supplied to the first gas separation membrane unit 11, the mixed gas is separated into a permeate gas, which is a gas that has permeated the gas separation membrane, and a retentate gas, which is a gas that has not permeated the gas separation membrane, due to a difference in the permeation rate through the gas separation membrane. The gas A is a gas having a larger permeation rate than the gas B through each of the gas separation membranes constituting the units 11 to 13, that is, each of the gas separation membranes has higher permeability to the gas A than to the gas B. The gas B is a gas having a smaller permeation rate than the gas A through each of the gas separation membranes constituting the units 11 to 13, that is, each of the gas separation membranes has lower permeability to the gas B than to the gas A.

The retentate gas discharged from the first gas separation membrane unit 11 is a gas that has a higher concentration of the gas B than the mixed gas as a raw material. The retentate gas is discharged from the retentate gas outlet 11b of the first gas separation membrane unit 11 and is supplied to the second gas separation membrane unit 12 through the first retentate gas line 14.

On the other hand, the permeate gas from the first gas separation membrane unit 11 is a gas that has a higher concentration of the gas A than the mixed gas as a raw material. The permeate gas is discharged from the permeate gas outlet 11c of the first gas separation membrane unit 11 and is supplied to the third gas separation membrane unit 13 through the first permeate gas line 15.

The retentate gas from the first gas separation membrane unit introduced into the second gas separation membrane unit 12 is separated into a permeate gas and a retentate gas by the unit 12. The retentate gas is richer in the gas B than the gas introduced into the second gas separation membrane unit 12, and is recovered as a product gas (gas B-enriched gas) from the retentate gas outlet 12b of the unit 12. On the other hand, the permeate gas is discharged from the permeate gas outlet 12c of the second gas separation membrane unit 12, and is recycled to the suction side of the compression means 21 in the raw material mixed gas supply line 16 via the second permeate gas recycle line 17 connected to the outlet 12c. The recycled permeate gas is mixed with the mixed gas as a raw material and then pressurized by the compression means 21.

The gas introduced into the third gas separation membrane unit 13 (this gas is rich in the gas A) is separated into a permeate gas and a retentate gas by the unit 13. The retentate gas is discharged from the retentate gas outlet 13b of the third gas separation membrane unit 13, and is recycled to the suction side of the compression means 21 in the raw material mixed gas supply line 16 via the third retentate gas recycle line 18 connected to the outlet 13b.

On the other hand, in the system 10 of the present embodiment, the permeate gas from the third gas separation membrane unit 13 is richer in the gas A than the gas introduced into the third gas separation membrane unit 13, and a part of this gas is recycled to the suction side of the compression means 21 in the raw material mixed gas supply line 16 via the first flow path 71, the flow path branch portion 74, and the second flow path 72. On the other hand, the remaining part is discharged to the outside of the system via the first flow path 71, the flow path branch portion 74, and the third flow path 73.

Conventionally, when the amount of the raw material mixed gas flowing into the system (hereinafter, it is also simply referred to as a "flow rate of the raw material mixed gas" or "raw material mixed gas flow rate") decreases, the membrane areas of the first gas separation membrane unit 11 and the third gas separation membrane unit 13 is excessive relative to the amount of the raw material mixed gas, and the gas B thus tends to be contained in the permeate gas discharged from the units 11 and 13. As a result, disadvantageously, the recovery rate of the gas B decreases, and also the amount of the gas B in the gas discharged to the outside of the system increases. The only solution to these problems has been the reduction in the membrane area or operation pressure. However, this solution may unfortunately result in a decrease in system performance, or a product gas pressure less than a standard value, which leads to a necessity of recompression of the product gas.

On the other hand, in the present invention, the flow path 72 is provided, and a part of the third permeate gas can be recycled to the suction side of the compression means 21 in the raw material mixed gas supply line 16 (hereinafter, it is also simply referred to as "recycled").

This allows the first permeate gas and the third permeate gas to flow in respective appropriate gas amounts for the membrane areas of the first gas separation membrane unit 11 and the third gas separation membrane unit 13 without reducing the membrane areas of the first gas separation membrane unit 11 and the third gas separation membrane unit 13, even when the flow rate of the raw material mixed gas is reduced. The third permeate gas normally contains the gas A at an extremely high concentration. By recycling the gas containing the gas A at a high concentration to the raw material mixed gas supply line 16, the gas B is less likely to be contained in the permeate gases discharged from the units 11 and 13, and the recovery rate of the gas B can thus be effectively improved.

Regarding the above-described points, since the third permeate gas contains the gas A at a very high concentration as described above, recycling this permeate gas to the first gas separation membrane unit 11 lowers the operation efficiency of the system, and therefore has been considered unthinkable in the art.

As is clear from comparison between Comparative Example 2 and Example 1 described later, there is an advantage in the present invention that the effect of improving the recovery rate of the product gas (the gas B) is easily obtained by increasing the recycle rate of the third permeate gas, PR3/P3. In contrast, in the case where the first permeate gas is recycled, the recovery rate of the gas B is likely to plateau regardless of how the recycle rate PR1/P1 is increased. Here, P1 is the flow rate of the first permeate gas (the flow rate of the permeate gas discharged from the permeate gas outlet of the first gas separation membrane unit 11, Nm³/h), and PR1 is a flow rate (Nm³/h) of the gas recycled to the suction side of the compression means 21 in the raw material mixed gas supply line 16, the gas being a portion of the first permeate gas.

As shown in Example 5 described later, a part of the first permeate gas and a part of the third permeate gas may be both recycled in the present invention. In view of enhancing the above-described advantage in improving the recovery rate of the gas B, the ratio of the recycle gas flow rate (Nm³/h) of the third permeate gas (PR3) to the total of the recycle rate (Nm³/h) of the first permeate gas (PR1) and the recycle rate (Nm³/h) of the third permeate gas (PR3) (i.e., the ratio PR3/(PR1+PR3) (%)) is preferably 1% or more, more preferably 5% or more, and still more preferably 10% or more.

In the present invention, since the third permeate gas having a high concentration of the gas A is used, the recovery rate of the product gas can be increased without increasing the recycle gas flow rate of the third permeate gas (PR3) so much, even if the flow rate of the raw material mix gas is greatly decreased (see each of Examples). In other words, the present invention has the advantage that the power required for the operation of the system and the recovery rate are easily balanced.

Further, in the present invention, since the third permeate gas having a high concentration of the gas A is recycled, the recovery rate of the product gas can be increased without requiring such a large increase in the recycle gas flow rate C even if the concentration of the gas B in the raw material mix gas becomes relatively high (see comparison between the run at 140 Nm³/h in Example 1 and that in Example 2; also at 100 Nm³/h and at 60 Nm³/h). Here, the recycle gas flow rate C (Nm³/h) is a total of the second permeate gas flow rate P2, the third retentate gas flow rate R3, the recycle gas flow rate of the first permeate gas, PR1, and the recycle gas flow rate of the third permeate gas, PR3. The second permeate gas flow rate P2 is the flow rate of the gas discharged from the permeate gas outlet of the second gas separation membrane unit 12, and the third retentate gas flow rate R3 is the flow rate of the gas discharged from the retentate gas outlet of the third gas separation membrane unit 13.

In the present invention, the raw material mixed gas preferably contains 30 mol% or more of the gas B, and particularly preferably contains 40 to 95 mol% of the gas B. In the present invention, the raw material mixed gas preferably contains 3 to 70 mol% of the gas A in view of high technical significance of the gas separation system of the present invention, and particularly preferably contains 5 to 60 mol% of the gas A. If the gas flow rate fluctuates during operation and/or between operations, the concentrations may fall within the above range at least once.

In the gas separation system of the present invention, the recycle gas flow rate of the permeate gas from the third gas separation membrane unit (PR3) is preferably set such that the ratio P3L/FL is small, wherein P3L is the decrease in the flow rate of the permeate gas from the third gas separation membrane unit 13, and FL is the decrease in the flow rate of the raw material mixed gas; and the PR3 is more preferably set such that the ratio P3L/FL is a negative value. This enables the control of the recycle gas flow rate of the permeate gas from the third gas separation membrane unit (PR3) in the gas separation system of the present invention such that the permeate gas flow rate of the third gas separation membrane unit 13 does not change or increases relative to FL, even when the flow rate of the raw material mix gas decreases. More specifically, when neither the first permeate gas nor the third permeate gas is recirculated, the set value of the raw material mixed gas flow rate (hereinafter also referred to as the "standard flow rate of the raw material mixed gas"; the state in which operation is carried out at this flow rate without recirculation of either the first permeate gas or the third permeate gas is referred to as the "standard state") is designated as F0a. When this flow rate is decreased from F0a to F0b without changing the constant conditions described above (FL = F0a - F0b), it is preferable to set the third permeate gas flow rate P3 such that the amount of decrease in the third permeate gas flow rate P3 from the flow rate P30 in the standard state (P3L = P30 - P3) is small, or that the third permeate gas flow rate P3 increases from the standard state; in particular, it is more preferable that the third permeate gas flow rate P3 be set so as to increase from the standard state. In Examples 1, 3, and 5 described later, the standard state is a state in which F0 is 200 Nm³/h (F0a is 200 Nm³/h) in the state of Comparative Example 1, and P3⁰ is 78 Nm³/h.

Here, the set raw material mixed gas flow rate refers to a flow rate set as a standard of the gas separation system. For example, the set raw material mixed gas flow rate is a flow rate set as a standard of the gas separation system in a state where neither the first permeate gas nor the third permeate gas is recycled.

It should be noted that the standard state herein is defined under a condition that the operation is performed at a constant operation pressure, a constant membrane area, a constant operation temperature, a constant concentration of the gas A and a constant concentration of the gas B without changing the module or compressor used, except for the recycle flow rates of the first permeate gas and the third permeate gas (hereinafter, it is also referred to as "under constant conditions"). The set raw material mixed gas flow rate is a flow rate at which a recovery rate and purity appropriate for the performance of the gas separation system under the constant conditions can be obtained.

Similarly, it is preferable to set the first permeate gas flow rate P1 such that, when the gas flow rate of the raw material mixed gas introduced decreases from Fa to Fb, the decrease in the flow rate P1 from that in the standard state (P1⁰; 95 Nm³/h in Examples 1, 3, and 5 described later) is small (the decrease is designated as PL1; P1L = P1⁰ - P1) or such that the flow rate P1 increases from that in the standard state. It is particularly preferably to set the first permeate gas flow rate P1 such that the flow rate P1 increases from that in the standard state.

Here, the expression "the decrease in the third permeate gas flow rate is small" and its derivatives mean, for example, that the value of P3L/FL is preferably 12% or less, more preferably 10% or less, still more preferably 7% or less, even more preferably 5% or less, preferably 1% or less, particularly preferably 0% or less. It is most preferably means that the third permeate gas flow rate increases from that in the standard state, and specifically that the value of P3L/FL is -1% or less.

The expression "the decrease in the flow rate of the permeate gas from the first gas separation membrane unit 11 is small" and its derivatives mean, for example, that the value of P1L/FL is preferably 12% or less, more preferably 10% or less, still more preferably 7% or less, even more preferably 5% or less, preferably 1% or less, particularly preferably 0% or less. It most preferably means that the flow rate of the permeate gas from the first gas separation membrane unit 11 increases from the flow rate in the standard state, and specifically that the value of P1L/FL is -2% or less.

The value of P3L/FL is preferably -70% or more, more preferably -60% or more, still more preferably -50% or more, and even more preferably -40% or more. The value of P1L/FL is preferably -100% or more, and more preferably -90% or more.

The value of P3L/P30 is preferably 12% or less, more preferably 7% or less, still more preferably 5% or less, even more preferably 1% or less, and particularly preferably 0% or less. The value of P3L/P30 is preferably -70% or more, more preferably -60% or more, still more preferably -50% or more, and even more preferably -40% or more.

The value of P1L/P10 is preferably 12% or less, more preferably 7% or less, still more preferably 5% or less, even more preferably 1% or less, and particularly preferably 0% or less. The value of P1L/P10 is preferably -100% or more, and more preferably -90% or more.

The values of the first permeate gas flow rate P1 and the third permeate gas flow rate P3 at the time of the predetermined decrease in the raw material mixed gas flow rate can be measured by, for example, a flow rate sensor (not shown).

The term "the constant operation pressure" (unit: MPaG) means that the fluctuation in the operation pressure is, for example, within ±1%. The term "the constant membrane area" means that the number of modules is not changed, or that the fluctuation in the membrane area (unit: m²) in each unit is within ±1%. The term "the constant composition" means that the fluctuation in the concentration (unit: mol%) of the gas A flowing in is within ±1% or less and that the fluctuation in the concentration (unit mol%) of the gas B flowing in is within ±1% or less. The term "the constant operation temperature" means that the fluctuation in the operation temperature is within ±1% or less.

The fluctuations of the concentrations of the gas A and the gas B are expressed by the following formula when the concentration is fluctuated from the concentration c1 (mol %) to the concentration c2 (mol%): Fluctuation in concentration =(c2-c1)/c1×100 (%)

The gas separation system may be configured such that the recovery rate of the gas B is much higher than that in the standard state of the system. For example, the recycle rate of the third permeate gas (PR3/P3) can be set such that the concentration of the gas A in the first permeate gas and/or the concentration of the gas A in the third permeate gas is higher than the respective concentrations in the standard state of the system, whereby the recovery rate of the gas B as the product gas can be improved.

The ratio of PR3 to P3 may fluctuate depending on the flow rate of the raw material mixed gas, wherein P3 is the flow rate (Nm³/h) of the permeate gas from the third gas separation membrane unit 13, and PR3 is the flow rate (Nm³/h) of the gas recycled to the raw material mixed gas supply line 16, the gas being a portion of the third permeate gas. The system of the present invention allows for a recycle rate of the third permeate gas (PR3/P3) greater than 0% and less than 100%. The upper limit of the recycle rate PR3/P3 during the system operation is not particularly limited and is appropriately set according to the purpose of the target gas separation. However, for example, the system is operated preferably such that the recycle rate PR3/P3 is 80% or less, and more preferably 60% or less, in view of improving the operation efficiency of the system. The recycle rate PR3/P3 is preferably 1% or more, and more preferably 5% or more, in view of exhibiting the effects of the present invention.

In the present invention, the ratio of the flow rate (Nm³/h) of the recycle gas from the third permeation gas (PR3) to the total recycle gas flow rate C (Nm³/h) (i.e., the ratio PR/C (%)) may be 0.1% or more, 0.5% or more, or 1% or more. In view of the operation efficiency of the system, PR/C is preferably 80% or less, more preferably 70% or less, and particularly preferably 60% or less.

In the system of the present invention, the decrease in the flow rate of the raw material mixed gas flowing into the gas separation system 10 (the flow rate is designated as F0; Nm³/h) (the decrease is (F0a-F0b)/F0a (%)) may be, for example, 5% or more, and may be 10% or more. The flow-rate decrease referred to by this decrease rate may occur during a single operation, for example. The operation time of the single operation may be 10 to 30000 hours, for example.

In the system of the present invention, the recycle rate of the third permeate gas (PR3/P3) is preferably a rate such that the recycle rate C/F1 is 90% or less, and more preferably 80% or less, in view of the operation efficiency of the system, wherein the recycle rate C/F1 is the ratio of the above-described recycle gas flow rate C to the flow rate of the first supply gas, F1, and the recycle gas flow rate C (unit: Nm³/h) is the total of the second permeate gas flow rate P2, the third retentate gas flow rate R3, the recycle gas flow rate of the first permeate gas, PR1, and the recycle gas flow rate of the third permeate gas, PR3.

In view of further enhancing the effect of maintaining the recovery rate of the gas B, it is preferable to use a separation membrane module having high separation performance as the first gas separation membrane unit 11. A high separation performance of the first gas separation membrane unit 11 can reliably prevent the gas B from being included on the permeation side together with a large amount of the gas A, to thereby improve the recovery rate of the gas B. From this viewpoint, the gas separation selectivity of the first gas separation membrane unit 11 (P₁'A/P₁'B) is preferably 30 or more, more preferably 35 or more, still more preferably 40 or more, and particularly preferably 50 or more. The gas separation selectivity P₁'A/P₁'B is preferably equal to or less than a certain value in view of reducing the required compression power. Specifically, from this viewpoint, the gas separation selectivity P₁'A/P₁'B is preferably 150 or less, more preferably 130 or less, still more preferably 120 or less, and particularly preferably 110 or less. Herein, the gas separation selectivity of a unit refers to the gas separation selectivity of the gas separation membrane constituting the unit at 40°C.

The permeation rate of the gas A through the first gas separation membrane unit 11 (P₁'A) is preferably 1.5×10⁻⁵cm³(STP)/cm² · sec · cmHg or more, more preferably 2×10⁻⁵cm³(STP)/cm² · sec · cmHg or more, still more preferably 3×10⁻⁵cm³(STP)/cm² · sec · cmHg or more, and particularly preferably 7×10⁻⁵cm³(STP)/cm² · sec · cmHg or more, in view of reducing the required compression power. In view of improving the recovery rate of the gas B, the permeation rate of the gas A (P₁'A) is preferably 100×10⁻⁵cm³(STP)/cm² · sec · cmHg or less, more preferably 45×10⁻⁵cm³(STP)/cm² · sec · cmHg or less, still more preferably 25×10⁻⁵cm³(STP)/cm² · sec · cmHg or less, and particularly preferably 15×10⁻⁵cm³(STP)/cm² · sec · cmHg or less. Herein, the gas permeability of a unit refers to the gas permeability of the gas separation membrane constituting the unit at 40°C.

Also, it is preferable to use a separation membrane module having high separation performance as the third gas separation membrane unit 13. A high separation performance of the third gas separation membrane unit 13, in addition to a high separation performance of the first gas separation membrane unit 11, can further increase the recovery rate of the gas B. From this viewpoint, the gas separation selectivity of the third gas separation membrane unit (P₃'A/P₃'B) is preferably 30 or more, more preferably 35 or more, still more preferably 40 or more, and particularly preferably 50 or more. The gas separation selectivity of the third gas separation membrane unit (P₃'A/P₃'B) is preferably 150 or less, more preferably 130 or less, still more preferably 120 or less, and particularly preferably 110 or less, in view of reducing the required compression power.

The permeation rate of the gas A through the third gas separation membrane unit 13 (P₃'A) is preferably 1.5×10⁻⁵cm³(STP)/cm² · sec · cmHg or more, more preferably 2×10⁻⁵cm³(STP)/cm² · sec · cmHg or more, still more preferably 3×10⁻⁵cm³(STP)/cm² · sec · cmHg or more, and particularly preferably 7×10⁻⁵cm³(STP)/cm² · sec · cmHg or more, in view of the required compression power. In view of improving the recovery rate of the gas B, the permeation rate of the gas A (P₃'A) is preferably 100×10⁻⁵cm³(STP)/cm² · sec · cmHg or less, more preferably 45×10⁻⁵cm³(STP)/cm² · sec · cmHg or less, still more preferably 25×10⁻⁵cm³(STP)/cm² · sec · cmHg or less, and particularly preferably 15×10⁻⁵cm³(STP)/cm² · sec · cmHg or less.

In the present invention, the gas separation selectivity of the gas separation membrane of the second gas separation membrane unit (P₂'A/P₂'B) is preferably 5 or more, more preferably 10 or more, still more preferably 15 or more, and particularly preferably 20 or more, in view of easily obtaining a gas separation system capable of maintaining the recovery rate of the gas B without increasing the required compression power even when the flow rate of the raw material mixed gas is reduced. In view of reducing the required compression power, the gas separation selectivity of the gas separation membrane of the second gas separation membrane unit (P₂'A/P₂'B) is preferably 150 or less, more preferably 90 or less, still more preferably 65 or less, and particularly preferably 55 or less.

Herein, the permeation rate through the second gas separation membrane unit (P₂'B) is preferably 3×10⁻⁵cm³(STP)/cm² · sec · cmHg or less, more preferably 2.5×10⁻⁵cm³(STP)/cm² · sec · cmHg or less, and still more preferably 2.0×10⁻⁵cm³(STP)/cm² · sec · cmHg or less in view of easily obtaining a gas separation system capable of maintaining the recovery rate of the gas B without increasing the required compression power even when the flow rate of the raw material mixed gas is reduced. The permeation rate through the gas separation membrane of the second gas separation membrane unit (P₂'B) is preferably 0.03×10⁻⁵cm³(STP)/cm² · sec - cmHg or more, more preferably 0.08×10⁻⁵cm³(STP)/cm² · sec · cmHg or more, still more preferably 0.3×10⁻⁵cm³(STP)/cm² · sec · cmHg or more, and particularly preferably 0.8×10⁻⁵cm³(STP)/cm² · sec · cmHg or more, in view of reducing the required membrane area.

The gas separation selectivity of the second gas separation membrane unit 12 is preferably equal to or less than that of the first gas separation membrane unit 11 and/or that of the third gas separation membrane unit 13 in view of reducing the membrane area while maintaining the recovery rate of the gas B.

In view of the above, it is preferable that the separation selectivity of the gas separation membrane constituting the second gas separation membrane unit (P₂'A/P₂'B) is lower than the separation selectivity of the gas separation membrane constituting the first gas separation membrane unit (P₁'A/P₁'B), in view of reducing the membrane area of the second gas separation membrane unit 12.

In view of further effectively reducing the membrane area of the second gas separation membrane unit 12, the separation selectivity of the gas separation membrane constituting the second gas separation membrane unit 12 (P₂'A/P₂'B) is preferably 0.8 or less, more preferably 0.75 or less, still more preferably 0.70 or less, and particularly preferably 0.60 or less, where the separation selectivity of the gas separation membrane constituting the first gas separation membrane unit 11 (P₁'A/P₁'B) is defined as 1. The gas separation selectivity P₂'A/P₂'B is preferably 0.2 or more in view of suppressing an increase in compression power, and more preferably 0.3 or more, where the gas separation selectivity of the first gas separation membrane unit 11 (P₁'A/P₁'B) is defined as 1.

The permeation rate through the gas separation membrane constituting the second gas separation membrane unit (P₂'A) is preferably higher than the permeation rate through the gas separation membrane constituting the first gas separation membrane unit (P₁'A) in view of reducing the membrane area of the second gas separation membrane unit 12. From this viewpoint, the permeation rate through the gas separation membrane constituting the second gas separation membrane unit 12 (P₂'A) is preferably 1.1 or more, more preferably 1.2 or more, and still more preferably 1.4 or more where the permeation rate through the gas separation membrane constituting the first gas separation membrane unit 11 (P₁'A) at 40°C is defined as 1. Further, in view of suppressing an increase in the compression power, P₂'A at 40°C is preferably 12 or less, and more preferably 7 or less, where the permeation rate through the gas separation membrane constituting the first gas separation membrane unit 11 (P₁'A) is defined as 1.

The separation selectivity of the second gas separation membrane unit (P₂'A/P₂'B) is preferably lower than the separation selectivity of the gas separation membrane constituting the third gas separation membrane unit (P₃'A/P₂'B). Such a configuration can further reduce the membrane area of the second gas separation membrane unit 12.

In view of further effectively reducing the membrane area of the second gas separation membrane unit 12, the gas separation selectivity of the second gas separation membrane unit 12 (P₂'A/P₂'B) is preferably 0.8 or less, more preferably 0.75 or less, still more preferably 0.70 or less, and particularly preferably 0.60 or less, where the gas separation selectivity of the third gas separation membrane unit 13 (P₃'A/P₃'B) is defined as 1. Where the separation selectivity of the gas separation membrane constituting the third gas separation membrane unit 13 (P₃'A/P₃'B) is defined as 1, the separation selectivity of the gas separation membrane (P₂'A/P₂'B) is preferably 0.2 or more in view of ease of availability of the gas separation membrane, and is preferably 0.3 or more in view of the purity of the product gas.

The permeation rate through the gas separation membrane constituting the second gas separation membrane unit (P₂'A) is preferably higher than the permeation rate through the gas separation membrane constituting the third gas separation membrane unit (P₃'A) in view of reducing the membrane area of the second gas separation membrane unit 12. From this viewpoint, the permeation rate through the gas separation membrane constituting the second gas separation membrane unit 12 (P₂'A) is preferably 1.1 or more, more preferably 1.2 or more, and still more preferably 1.4 or more, where the permeation rate through the gas separation membrane constituting the third gas separation membrane unit 13 (P₃'A) is defined as 1. Where the permeation rate through the gas separation membrane constituting the third gas separation membrane unit 13 (P₃'A) is defined as 1, P₂'A is preferably 12 or less in view of easy availability of the gas separation membrane, and is preferably 5 or less in view of the purity of the product gas.

The ratio between the membrane area of the first gas separation membrane unit 11 (S1) and the membrane area of the third gas separation membrane unit (S3) is not particularly limited. In view of increasing the recovery rate of the gas B, S1:S3 is preferably 1:0.3 or more, and more preferably 1:0.5 or more. S1:S3 is preferably 1:2.0 or less, and more preferably 1:1.5 or less.

The ratio between the membrane area of the second gas separation membrane unit 12 (S2) and the membrane area of the third gas separation membrane unit (S3) is not particularly limited. In view of increasing the recovery rate of the gas B, S3:S2 is preferably 1:0.2 or more, and more preferably 1:0.4 or more. S3:S2 is preferably 1:4.0 or less, and more preferably 1:3.0 or less.

The fluctuation in the flow rate of the raw material mixed gas may be either that during the operation or that between the operations, and the present invention is adaptable to the fluctuation in the recycle gas flow rate of the third permeate gas in either case.

The fluctuation in the flow rate of the raw material mixed gas can be detected by a sensor (not shown).

As described above, the system 10 may include the control unit 5 configured to detect a fluctuation in the flow rate of the raw material mixed gas or a fluctuation in the concentration of the gas in the first permeate gas or the third permeate gas caused by the fluctuation in the flow rate of the raw material mixed gas, and to control the flow rate adjustment valves 75 and 76.

The control unit 5 in the present embodiment includes a flow rate/composition data acquisition unit 50 and an adjustment instruction unit 55. The control unit 5 is electrically connected to the flow rate adjustment valves 75 and 76, a flow rate sensor (not shown) provided in the raw material mixed gas supply line, or a gas component concentration sensor provided in the permeate gas outlet of the first gas separation membrane unit 11 or the permeate gas outlet of the third permeate gas, and the control unit 5 controls the operation of these. The control of each unit in the control unit 5 is carried out by a CPU, a ROM, a RAM, and others, and is realized by, for example, the CPU, which loads a program stored in the ROM, the disk, or the like into the RAM and executes the program.

The flow rate/composition data acquisition unit 50 acquires a value of the flow rate in the raw material mixed gas supply line 16 measured by a flow rate sensor (not shown), and stores data of the flow rate value in time series. The flow rate/composition data acquisition unit 50 acquires the flow rate value in real time during the operation of the system 10. Hereinafter, the data containing the flow rate values stored in time series is also simply referred to as "flow rate data". The flow rate/composition data acquisition unit 50 stores the flow rate data in a storage unit (not shown). In addition, the flow rate/composition data acquisition unit 50 performs control related to the flow rate data, such as control of writing the flow rate data to the storage unit and control of reading the flow rate data from the storage unit.

When the flow rate value of the raw material mixed gas supply line 16 detected by the sensor (not shown) becomes a predetermined value, the adjustment instruction unit 55 controls the flow rate adjustment valves 75 and/or 76 to adjust the recycle rate of the third permeate gas (PR3/P3). In the control unit 5, the flow rate/composition data acquisition unit 50 may further analyze the composition (the gas A concentration or the gas B concentration) of the raw material mixed gas in the raw material mixed gas supply line using a sensor (a flow rate detection unit) (not illustrated), and the adjustment instruction unit 55 may determine the recycle rate of the third permeate gas (PR3/P3) on the basis of the composition of the raw material mixed gas obtained in addition to the flow rate value.

Alternatively, instead of measuring the flow rate of the raw material mixed gas, the concentration of the gas B in the first permeate gas and that in the third permeate gas may be detected by the gas component concentration sensors provided in the permeate gas outlet of the first gas separation membrane unit 11 and the permeate gas outlet for the third permeate gas, respectively, to control the recycle rate of the third permeate gas (PR3/P3) on the basis of these gas B concentrations.

As can be seen from Examples described later, the recovery rate of the product gas can be maintained and the purity of the product gas can be improved in the system by adjusting the recycle rate of the third permeate gas (PR3/P3) in response to the fluctuation in the flow rate of the raw material mixed gas, without increasing or decreasing the number of gas separation membrane modules or reducing the operation pressure. As a result, the operation efficiency of the system can be maintained and the number of gas separation membrane modules used in the gas separation system can be stabilized. Accordingly, it is possible to prevent the variation in the degree of contamination between modules as described hereinabove and also to reduce the overall cost including the manufacturing cost and maintenance cost of the gas separation system.

Further, in the present invention, it is possible to easily address a fluctuation in the composition of the raw material mixed gas. For example, if an increase in the proportion of the gas B and an decrease in the proportion of the gas A in the raw material mixed gas occur during the supply of the raw material mixed gas and/or a period during which the supply is suspended, the recovery rate of the gas B can be maintained by increasing the recycle rate of the third permeate gas (PR3/P3) in the present invention, without increasing the number of modules of the third gas separation membrane unit 13.

As the flow rate sensor for the raw material mixed gas, a thermal mass flow meter, an ultrasonic flow meter, or a vortex flow meter can be used, for example.

A fluctuation in the composition of the raw material mixed gas (in particular, a fluctuation in the concentration of the gas A or the gas B) can be detected by a sensor (not shown). The sensor is not particularly limited as long as it can measure the concentration of the gas A or the gas B, and a known sensor can be used depending on the use environment or the type of the gas. Examples thereof include a CH₄ densitometer, a CH4 detector, a CO₂ densitometer, and a CO₂ detector. Analysis equipment to which a gas chromatograph analysis technique or an infrared spectroscopy technique is applied is also preferably used.

In the present invention, it is possible to operate the gas separation system without changing the number of operating modules of the third gas separation membrane unit 13 during operation and/or between operations of the gas separation system. The term "during operation" means a period from the start to the stop of the supply of the raw material mixed gas into the gas separation system, during which the raw material mixed gas is continuously supplied to allow the gas to flow from the raw material mixed gas supply line 16 to each of the units 11, 12, and 13. The term "between operations" means a period from a time point when the gas flow from the raw material mixed gas supply line 16 to each of the units 11, 12, and 13 is stopped to a time point when the gas flow is restarted. The operating module is a module that contributes to gas separation.

In some conventional systems, the number of operating modules is adjusted by an opening/closing valve or the like provided in each module in response to a fluctuation in the composition of the raw material mixed gas or a fluctuation in the gas flow rate. However, in such systems, on/off valves for individual modules are required, and a degree of deterioration of membrane permeability or the like varies between a module that continues operation and a closed module, which may lead to a decrease in system performance.

In the present invention, on the other hand, it is not necessary to change the number of operating modules during operation and/or between operations, and the decrease in system performance is thus avoided.

The gas separation membrane in each of the gas separation membrane units 11, 12, and 13 can be appropriately selected according to the type of mixed gas to be supplied or the target product gas. As the gas separation membrane, the membranes used in the art can be used without particular limitation. Examples thereof include: rubber-like polymer materials such as silicone resins and polybutadiene resins; glass-like polymer materials such as polyimide, polyetherimide, polyamide, polyamideimide, polysulfone, polycarbonate, and cellulose; and ceramic materials such as zeolite. The gas separation membrane may be any of a homogeneous membrane, an asymmetric membrane composed of a homogeneous layer and a porous layer, and a microporous membrane. The gas separation membrane may be housed in the casing in any form of a plate-and-frame type, a spiral type, and a hollow fiber type. A particularly suitable gas separation membrane is an aromatic polyimide hollow fiber gas separation membrane having an asymmetric structure including a homogeneous layer with a thickness of 10 nm or more and 200 nm or less, a porous layer with a thickness of 20 µm or more and 200 µm or less and also having an inner diameter of about 30 µm or more and 500 µm or less.

One gas separation membrane module or a plurality of gas separation membrane modules may be included in one gas separation membrane unit. When two or more gas separation membrane modules are included in one gas separation membrane unit, these are preferably connected in parallel in the unit. When each gas separation membrane unit includes a plurality of gas separation membrane modules, the membrane area in the unit can be easily adjusted by changing the number of the gas separation membrane modules.

The kinds of the raw material mixed gas and the separation membrane module are not limited. Examples of the combination thereof are as follows: a separation membrane module having a higher permeation rate of carbon dioxide (CO₂) than methane (CH₄) is used as the separation membrane module 40 to which the raw material mixed gas is supplied, and a gas containing CH₄ and CO₂ is used as the raw material mixed gas; and a separation membrane module having a higher permeation rate of oxygen gas (O₂) than nitrogen gas (N₂) is used as the separation membrane module 40 to which the raw material mixed gas is supplied, and a gas containing N₂ and O₂ is used as the raw material mixed gas. Examples of the raw material mixed gas containing CH₄ and CO₂ include biogas, landfill gas, and natural gas. Examples of the raw material mixed gas containing N₂ and O₂ include air. The biogas is a gas generated when biomass is brought into contact with a microorganism under anaerobic conditions to perform a fermentation process such as methane fermentation by the microorganism. Examples of the biomass include organic matters such as food waste, agricultural residue, sewage sludge, and livestock waste. The landfill gas refers to a gas generated by microbial decomposition or the like of organic matter in a waste landfill. Generally, biogas and landfill gas are each composed mainly of methane and carbon dioxide. The present invention is preferably applied to biogas or landfill gas. The flow rate of these gases may not be constant; however, even in such a case, the gas separation system in the present invention can be operated at an extremely stable recovery rate of methane as a product gas without changing the number of modules of each gas separation membrane unit.

In the case where the gas B is methane, the upper limit of the methane concentration in a discharged gas is regulated since methane is a greenhouse gas. Accordingly, when the methane concentration in a discharged gas exceeds the regulatory limit, direct discharge is impossible, and combustion is thus necessary in some cases. Thus, in the case where methane is the gas B, the methane concentration in the gas discharged from the system is particularly important since it serves as a measure of environmental regulations in the system. In the present invention, the concentration of the gas B in the discharged gas can be controlled in response to the fluctuation in the flow rate of the raw material mixed gas, as described above, and it is thus possible to prevent an increase in the amount of methane in the third permeate gas discharged to the outside of the system. This easily enables an environmentally conscious design of the system.

The gas separation system of the present embodiment can be suitably used, for example, in a method of separating and recovering methane gas, which less readily permeates, from biogas mainly containing methane gas and carbon dioxide gas. The methane gas corresponds to gas B, which less readily permeates, and the carbon dioxide gas corresponds to gas A, which readily permeates. In this case, when the separated and recovered methane gas is supplied to, for example, the municipal gas line, a gas compressor as a compression means may be provided at the retentate gas outlet 12b of the second gas separation membrane unit 12 to increase the pressure of the methane gas.

The pressure of the gas flowing into the first gas separation membrane unit 11 by the compression means is generally preferably 0.2 MPaG or more and 3.0 MPaG or less, and more preferably 0.3 MPaG or more and 2.4 MPaG or less.

The pressure of the gas flowing into the third gas separation membrane unit 13 is generally preferably 0.01 MPaG or more and 0.7 MPaG or less, and more preferably 0.02 MPaG or more and 0.5 MPaG or less.

The operation temperature of each gas separation membrane unit is usually preferably 0°C or higher and 80°C or lower, and more preferably 5°C or higher and 60°C or lower. Here, the operation temperature refers to the temperature of the gas at the inlet of the gas separation membrane unit (gas separation membrane module) while the mixed gas is supplied to the gas separation membrane unit.

In view of obtaining a lower separation selectivity of the second gas separation membrane unit 12 than that of the first gas separation membrane unit 11 during operation, the operation temperature of the second gas separation membrane unit 12 may be higher than that of the first gas separation membrane unit 11.

Next, a second embodiment of the present invention will be described with reference to FIG. 2. The second embodiment of the present invention is such that the first permeate gas line 15 connecting the permeate gas outlet 11c of the first gas separation membrane unit 11 and the gas inlet 13a of the third gas separation membrane unit 13 in the first embodiment shown in FIG. 1 is branched to provide the flow path 90. The flow path 90 connects the first permeate gas line 15 and the suction side of the compression means 21 of the raw material mixed gas supply line 16. A flow rate adjusting valve 91 capable of adjusting the flow rate of the gas flowing into the flow path 90 from the first permeate gas line 15 is provided in the flow path branch portion 92 branching from the first permeate gas line 15 to the flow path 90. In FIG. 2, the flow control valve 91 is a three-way valve. The flow path 90 allows a part of the first permeate gas to be recycled to the position on the suction side of the compression means 21 in the raw material mixed gas supply line 16. In this embodiment, the control unit 5 can control the flow rate adjustment valve (three-way valve) 91 in addition to the flow rate adjustment valve (three-way valve) 77 to thereby control both the recycle rate of the first permeate gas (PR1/P1) and the recycle rate of the third permeate gas (PR3/P3). Accordingly, fine control according to various purposes can be performed on various conditions such as the recovery rate and purity of the gas B, the recycle rate (C/F1), and the operation pressure. In addition, recycling not only the third permeate gas but also the first permeate gas also brings an advantage that the amount of the flow to be compressed is kept within the proper range for the compressor operation.

Further, in the embodiment of FIG. 2, the compression means 22 is interposed in the first permeate gas line 15. This may also be provided in the embodiment shown in FIG. 1 (an embodiment in which the first permeate gas is not recycled). In an embodiment in which the first permeate gas in the first permeate gas line 15 is partially recycled to the raw material mixed gas supply line 16 as shown in FIG. 2, it is advantageous to provide the compression means 22 closer to the third gas separation membrane unit 13 than the branch portion 91 of the first permeate gas line 15, in view of reducing the compression power.

Although the present invention has been described based on preferred embodiments thereof, the present invention is not limited to these embodiments. For example, in the above-described embodiments, a unit constituted by a gas separation membrane module having hollow fiber membranes is used as an example of each gas separation membrane unit, and instead of this, however, a gas separation membrane unit in another form may be used.

In addition to the compression means in the above-described embodiments, a decompression means may be provided on the permeation side of any one or more of the units to thereby apply power to the mixed gas flow to pass through the separation membrane. As such a decompression means, a known vacuum pump can be used, for example.

### Examples

Hereinafter, the present invention will be described in more detail by way of Examples. However, the scope of the present invention is not limited by these examples.

### Comparative Examples 1 and 3

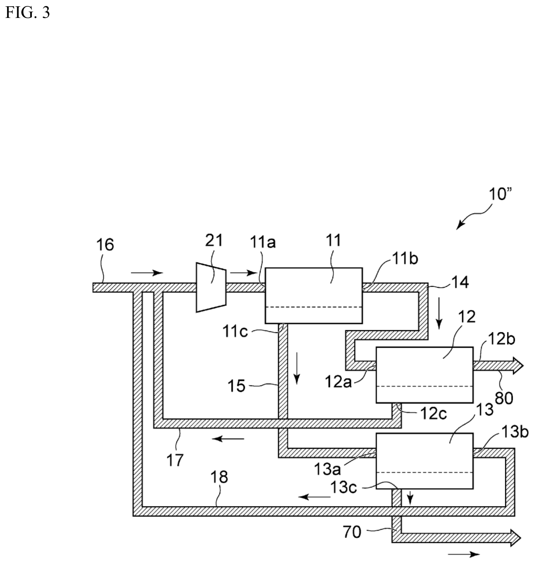

A mixed gas containing carbon dioxide and methane (model gas of biogas) was separated using a conventional gas separation system 10" shown in FIG. 3. A compressor was used as the compression means 21 in the system 10". The flow rate of the raw material mixed gas (flow rate of the gas flowing into the system) and the composition of the raw material mixed gas were as shown in Table 2 below. The raw material mixed gas was heated by compressing by the compression means, cooled by a cooling device (not shown), and supplied to each gas separation membrane unit. The conditions were as follows.

The operation temperature is the temperature of the gas separation membrane in each gas separation membrane unit.
- Temperature of the raw material mixed gas flowing into the system: 40°C
- Pressure (operation pressure) of gas flowing into the first gas separation membrane unit 11: 1.0 MPa·G
- Pressure (operation pressure) of gas flowing into the third gas separation membrane unit 13: 0.19 MPa·G
- Operation temperature of the first gas separation membrane unit 11: 40°C
- Operation temperature of the second gas separation membrane unit 12: 40°C
- Operation temperature of the third gas separation membrane unit 13: 40°C
- The number of modules of the first gas separation membrane unit 11: 11
- The number of modules of the third gas separation membrane unit 13: 11
- Gas separation selectivity of the first gas separation membrane unit 11: use Module A.
- Gas separation selectivity of the third gas separation membrane unit 13: use Module A.

As each of modules constituting the first and third gas separation membrane units 11 and 13, a module A was used, the module A including a gas separation membrane composed of polyimide hollow fiber membranes and a case housing the separation membrane. As a module constituting the second gas separation membrane unit 12, a module A or B was used, the modules A and B each including a gas separation membrane composed of polyimide hollow fiber membranes and a case housing the separation membrane. As shown in Table 1, the gas separation membrane module A has a P'_{CO2} of 9.9, a P'_{CH4} of 0.18, and a P'_{CO2}/P'_{CH4} of 55. These numerical values are at an operation temperature of 40°C. The membrane area per module was 24m².

Table 1 shows the number of modules of the second gas separation membrane unit 12, the total number of modules used in the units 11 to 13, the flow rate of the gas flowing into each of the gas separation membrane units, and the CO₂ concentration.

Furthermore, the CH₄ purity of the product gas (the retentate gas from the second gas separation membrane unit 12) and the recovery rate of the product gas (the flow rate, in percent, of the CH₄ component contained in the retentate gas from the second gas separation membrane unit 12 where the flow rate of the CH₄ component contained in the raw material mixed gas is defined as 100%) are shown in Table 2.

### Comparative Example 2

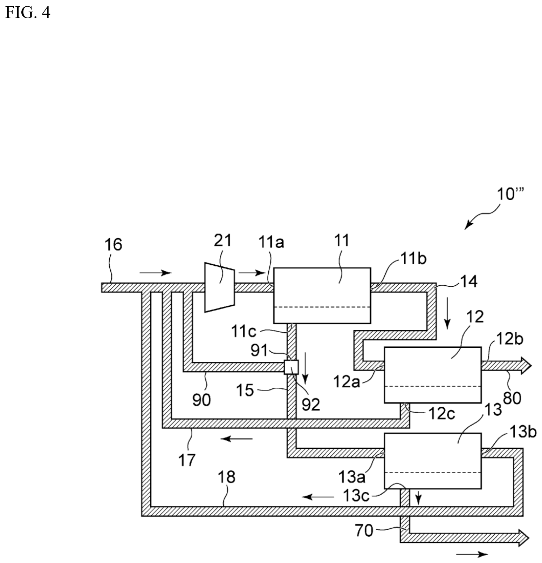

A mixed gas was separated in the same manner as in Comparative Example 1, except that the gas separation system 10‴ shown in FIG. 4 was used, and that the recycle gas flow rate of the first permeate gas (PR1) was set to the value shown in Table 2.

### Comparative Example 4

A mixed gas was separated in the same manner as in Comparative Example 1, except that the module used in the second gas separation membrane unit 12 was changed to the module B in Table 1.

### Examples 1 to 3

A mixed gas was separated in the same manner as in Comparative Example 1, except that the system 10 in FIG. 1 was used, and that the recycle gas flow rate of the third permeate gas (PR3) was set to the value shown in Table 2.

### Example 4

A mixed gas was separated in the same manner as in Example 1, except that the module used in the second gas separation membrane unit 12 was changed to the module B in Table 1.

### Example 5

A mixed gas was separated in the same manner as in Comparative Example 1, except that a gas separation system 10' shown in FIG. 2 was used though the compression means 22 was not provided, and that the recycle gas flow rate of the third permeation gas (PR3) and the recycle gas flow rate of the first permeation gas (PR1) were each set to the value shown in Table 2.

**Table 1**

| **Separation membrane module** | **P'_{CO2}** | **P'_{CH4}** | **P'_{CO2} / P'_{CH4}** | **Membrane area per module m²** |
|---|---|---|---|---|
| **A** | **9.9** | **0.18** | **55** | **24** |
| **B** | **21** | **0.82** | **26** | **20** |

| | | | | |
|---|---|---|---|---|
| **P' (unit: ×10⁻⁵cm³(STP)/cm²·sec·cmHg)** | | | | |

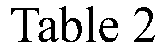

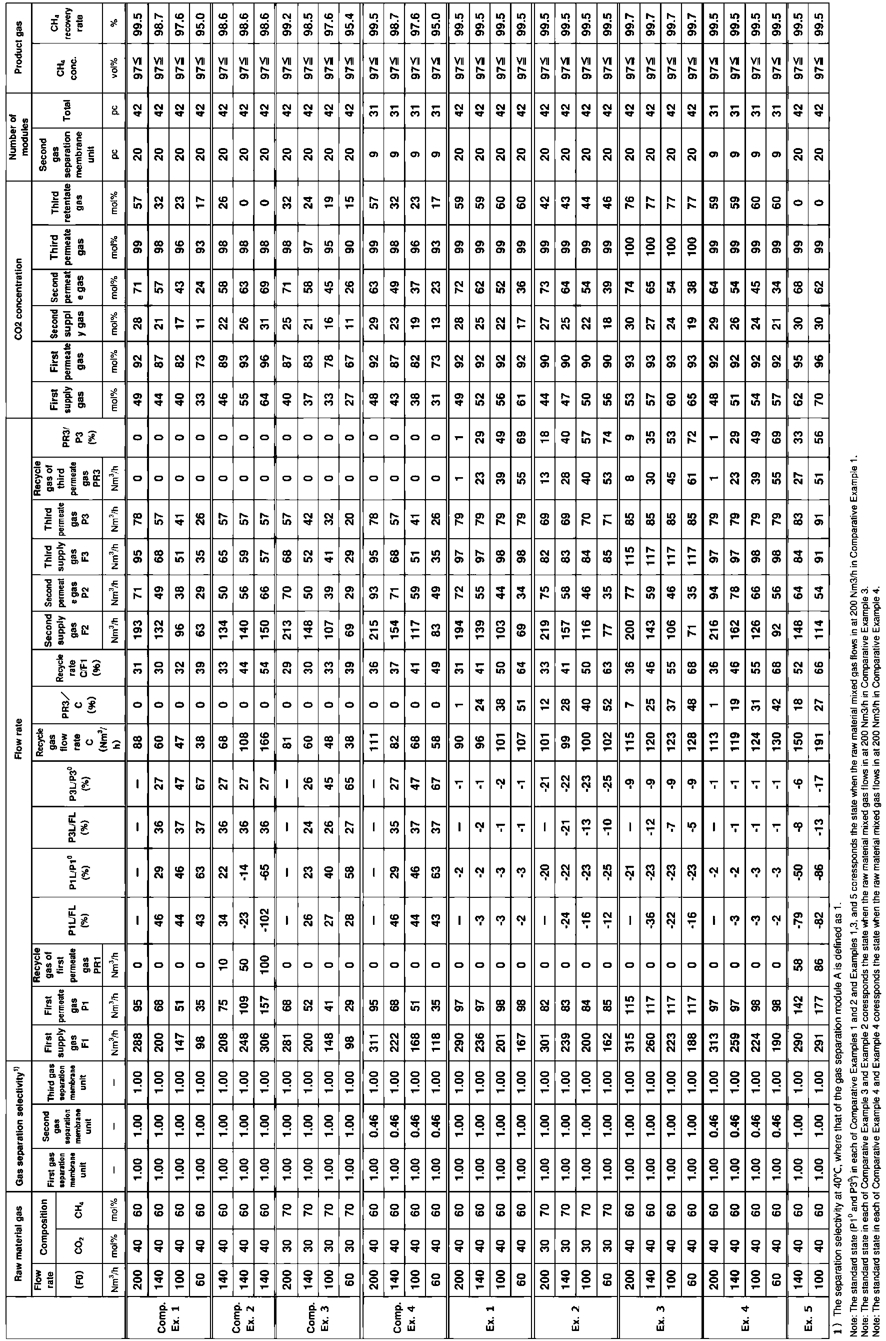

The system of the present invention, in which a part of the third permeate gas was recycled to the first gas separation membrane unit, was used in each of Examples 1 to 5, and in these Examples, even if the flow rate of the raw material mixed gas was decreased, the recovery rate of CH₄ as high as 99.5% or more was maintained while maintaining the purity of the product gas without increasing or decreasing the number of modules, as shown in Table 2. Particularly, in Example 4, high purity and high recovery rate was maintained at an operation pressure comparable to that in Example 1 with a reduction in the required membrane area as compared to Example 1.

In Comparative Examples 1, 3, and 4, the recovery rate of CH₄ was significantly reduced with a decrease in the flow rate of the raw material mixed gas. In the three-stage system, the effect of improving the recovery rate of CH₄ was not sufficient in Comparative Example 2, in which the permeate gas from the first gas separation membrane unit 11 was recycled to the suction side of the compression means 21 in the raw material mixed gas supply line 16 as described in PTL 1, instead of the third gas separation membrane unit 13.

### Industrial Applicability

According to the present invention, there is provided a three-stage gas separation system capable of operating without changing the number of modules to be operated in a gas separation membrane unit while suppressing the influence on the purity and recovery rate of an enriched gas (product gas) even when the flow rate of a raw material mixed gas decreases.

## Claims

1. A gas separation system for enriching at least one of gases contained in raw material mixed gas by supplying the raw material mixed gas to a gas separation membrane unit included in the gas separation system,
wherein the gas separation system comprises a first gas separation membrane unit, a second gas separation membrane unit, and a third gas separation membrane unit,
each gas separation membrane unit comprises at least a gas inlet, a permeate gas outlet, and a retentate gas outlet,
the retentate gas outlet of the first gas separation membrane unit and the gas inlet of the second gas separation membrane unit are connected via a first retentate gas line,
the permeate gas outlet of the first gas separation membrane unit and the gas inlet of the third gas separation membrane unit are connected via a first permeate gas line, and
a raw material mixed gas supply line is connected to the gas inlet of the first gas separation membrane unit, and a compression means is interposed in the raw material mixed gas supply line,
a third permeate gas line is connected to the permeate gas outlet of the third gas separation membrane unit,
the permeate gas outlet of the second gas separation membrane unit and a position on a suction side of the compression means in the raw material mixed gas supply line are connected to each other via a second permeate gas recycle line, and
the retentate gas outlet of the third gas separation membrane unit and a position on a suction side of the compression means in the raw material mixed gas supply line are connected to each other via a third retentate gas recycle line,
the third permeate gas line comprises a flow path that allows a part of the permeate gas discharged from the third gas separation membrane unit to be recycled to a position on a suction side of the compression means in the raw material mixed gas supply line, and
an enriched gas is recovered from the retentate gas outlet of the second gas separation membrane unit.

2. The gas separation system according to claim 1, wherein the third permeate gas line comprises a flow path branch portion, and a first flow path, second flow path, and third flow path below, and further comprises a flow rate adjustment unit that adjusts a flow rate of the permeate gas flowing into the second flow path;
First flow path: a flow path connecting the flow path branch portion and the permeate gas outlet of the third gas separation membrane unit,
Second flow path : a flow path connecting the flow path branch portion and a position on the suction side of the compression means in the raw material mixed gas supply line,
Third flow path : a flow path connecting the flow path branch portion and the outside of the system.

3. The gas separation system according to claim 2, wherein the gas separation system comprises: a flow rate detection unit configured to detect a flow rate of the raw material mixed gas flowing into the raw material mixed gas supply line; and a control unit configured to instruct the flow rate adjustment unit to increase the flow rate of the permeate gas flowing into the second flow path when the flow rate of the raw material mixed gas detected by the flow rate detection unit decreases.

4. The gas separation system according to claim 1 or 2, wherein the raw material mixed gas includes a gas A and a gas B, each of the first gas separation membrane unit, the second gas separation membrane unit, and the third gas separation membrane unit has higher permeability to the gas A than to the gas B,
the gas separation membrane of the first gas separation membrane unit has a gas separation selectivity (P_{1'}A/P₁'B) of 30 or more at 40°C, and the gas separation membrane of the third gas separation membrane unit has the gas separation selectivity (P₃'A/P₃'B) of 30 or more at 40°C.

5. The gas separation system according to claim 1 or 2, wherein the raw material mixed gas is a biogas, and a methane-enriched gas is recovered from the retentate gas outlet of the second gas separation membrane unit.

6. The gas separation system according to claim 1 or 2, wherein the permeate gas discharged from the third gas separation membrane unit has a permeate gas flow rate P3; a gas recycled to the position on the suction side of the compression means in the raw material mixed gas supply line has a flow rate PR3, the gas being a portion of the permeate gas discharged from the third gas separation membrane unit; and a ratio of PR3 to P3 is 1% or more and 80% or less.

7. The gas separation system according to claim 1 or 2, wherein the amount of the raw material mixed gas flowing into the gas separation system fluctuates by 5% or more during operation.

8. The gas separation system according to claim 1 or 2, wherein the first permeate gas line comprises a flow path that allows a part of permeate gas discharged from the first gas separation membrane unit to be recycled to a position on the suction side of the compression means in the raw material mixed gas supply line.

9. A method for producing enriched gas, the method comprising supplying raw material mixed gas to a gas separation system to enrich at least one of gases contained in the raw material mixed gas,
wherein the gas separation system comprises a first gas separation membrane unit, a second gas separation membrane unit, and a third gas separation membrane unit,
each gas separation membrane unit comprises at least a gas inlet, a permeate gas outlet, and a retentate gas outlet,
the retentate gas outlet of the first gas separation membrane unit and the gas inlet of the second gas separation membrane unit are connected via a first retentate gas line,
the permeate gas outlet of the first gas separation membrane unit and the gas inlet of the third gas separation membrane unit are connected via a first permeate gas line, and
a raw material mixed gas supply line is connected to the gas inlet of the first gas separation membrane unit, and a compression means is interposed in the raw material mixed gas supply line,
a third permeate gas line is connected to the permeate gas outlet of the third gas separation membrane unit,
the permeate gas outlet of the second gas separation membrane unit and a position on a suction side of the compression means in the raw material mixed gas supply line are connected to each other via a second permeate gas recycle line, and
the retentate gas outlet of the third gas separation membrane unit and a position on a suction side of the compression means in the raw material mixed gas supply line are connected to each other via a third retentate gas recycle line,
the third permeate gas line comprises a flow path that allows a part of the permeate gas discharged from the third gas separation membrane unit to be recycled to a position on a suction side of the compression means in the raw material mixed gas supply line, and
an enriched gas is recovered from the retentate gas outlet of the second gas separation membrane unit.
